(19)

**Europäisches Patentamt**
**European Patent Office**
**Office européen des brevets**

(11) **EP 4 636 542 A1**

(12) **EUROPEAN PATENT APPLICATION**

(43) Date of publication:
22.10.2025 Bulletin 2025/43

(21) Application number: 24315179.2

(22) Date of filing: 16.04.2024

(51) International Patent Classification (IPC):
*G06F 3/01* (2006.01)     *H04N 21/236* (2011.01)

(52) Cooperative Patent Classification (CPC):
G06F 3/016; G06F 3/011; H04N 21/23614

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **Lecuyer, Gurvan**
  **35000 RENNES (FR)**
• **Galvane, Quentin**
  **35235 THORIGNE-FOUILLARD (FR)**
• **Guillotel, Philippe**
  **35770 VERN SUR SEICHE (FR)**
• **Hirtzlin, Patrice**
  **35830 BETTON (FR)**

(74) Representative: **Vossius & Partner Patentanwälte Rechtsanwälte mbB Siebertstraße 3 81675 München (DE)**

(54) **MPEG HAPTIC MATERIAL OPTIMIZATION IN A SCENE DESCRIPTION FRAMEWORK**

(57) Some embodiments of a method may include: obtaining a bitstream corresponding to an immersive environment; decoding the bitstream, wherein the decoded bitstream comprises information corresponding to a first object associated with the immersive environment, wherein the information comprises haptic texture information corresponding to a first haptic texture property associated with the first object, and wherein the haptic texture information comprises: at least one range bound of the first haptic texture property, and at least one value of the first haptic texture property; and rendering, in the immersive environment, the first haptic texture property associated with the first object.

FIG. 2

**Description**

**INCORPORATION BY REFERENCE**

The present application incorporates by reference in their entirety the following applications: European Patent Application Serial No. EP23307192, entitled "HAPTICS EFFECTS ENCAPSULATION INTO IMAGE OR AUDIO FILE FORMATS - GIF FORMAT" and filed December 13, 2023 ("'192 application"); and European Patent Application Serial No. EP23307323, entitled "HAPTICS BODY MODELS MAPPING" and filed December 21, 2023 ("'323 application").

**BACKGROUND**

Haptics refer to the sense of touch and includes two components, tactile and kinesthetic. The first component relates to tactile sensations, such as friction, roughness, hardness, temperature and is felt through the mechanoreceptors of the skin (Merkel cell, Ruffini ending, Meissner corpuscle, Pacinian corpuscle), and thermoreceptors. The second component is linked to the sensations of force/torque, position, and motion/velocity provided by the muscles, tendons, and mechanoreceptors in the joints.

**SUMMARY**

An example method in accordance with some embodiments may include: obtaining a bitstream corresponding to an immersive environment; decoding the bitstream, wherein the decoded bitstream includes information corresponding to a first object associated with the immersive environment, wherein the information includes haptic texture information corresponding to a first haptic texture property associated with the first object, and wherein the haptic texture information includes: at least one range bound of the first haptic texture property, and at least one value of the first haptic texture property; and rendering, in the immersive environment, the first haptic texture property associated with the first object.

For some embodiments of the example method, the first haptic texture property is selected from the group consisting of stiffness, friction, vibrotactile texture, temperature, vibration, and custom haptic data.

For some embodiments of the example method, the haptic texture information is formatted to comply with an MPEG-I-based scene description format.

For some embodiments of the example method, the haptic texture information is formatted to comply with an MPEG_haptic_material extension to a glTF-based protocol.

For some embodiments of the example method, the haptic texture information is formatted to comply with an MPEG_hapticTexture object extension to a glTF-based protocol.

For some embodiments of the example method, the haptic texture information further includes an index associated with the first haptic texture property.

Some embodiments of the example method may further include using the index to determine a location of the at least one value of the first haptic texture property.

For some embodiments of the example method, the haptic texture information further includes a texture coordinate index corresponding to a texture coordinate map associated with the first haptic texture property.

Some embodiments of the example method may further include using the texture coordinate index to determine a location of the at least one value of the first haptic texture property.

For some embodiments of the example method, the information further includes visual material information corresponding to a visual material property associated with the first object,

Some embodiments of the example method may further include rendering, in the immersive environment, the visual material property associated with the first object.

For some embodiments of the example method, the haptic texture information further includes type information indicating a type associated with the first haptic texture property.

For some embodiments of the example method, the haptic texture information further includes a 2D map including references to haptic signals.

Some embodiments of the example method may further include: rendering, in the immersive environment, a second haptic texture property associated with the first object, wherein the information further includes haptic information corresponding to the second haptic texture property associated with the first object, and wherein the haptic information includes: at least one range bound of the second haptic texture property, and at least one value of the second haptic texture property.

An example apparatus in accordance with some embodiments may include: a processor; and a memory storing instructions operative, when executed by the processor, to cause the apparatus to perform the method of any one of the methods listed above.

## BRIEF DESCRIPTION OF THE DRAWINGS

FIG. 1A is a system diagram illustrating an example set of interfaces for a system according to some embodiments.

FIG. 1B is a system diagram illustrating an example set of interfaces for a scene description (stored as an item in gITF.json), three video tracks, an audio track, and a JSON patch update track in an ISOBMFF file according to some embodiments.

FIG. 1C is a system diagram illustrating an example set of interfaces for an MPEG-I node hierarchy supporting elements of scene interactivity according to some embodiments.

FIG. 1D is a schematic plan view illustrating example relationships of extended reality scene description objects according to some embodiments.

FIG. 2 is a system diagram illustrating an example set of interfaces for an MPEG-I node hierarchy showing location of example extensions according to some embodiments.

FIG. 3 is a schematic illustration showing an example grid of taxels, mapping pixels to different haptic textures according to some embodiments.

FIG. 4 is a schematic illustration showing an example scene with three example objects according to some embodiments.

FIG. 5 is a flowchart illustrating an example process for decoding haptic texture information according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

## DETAILED DESCRIPTION

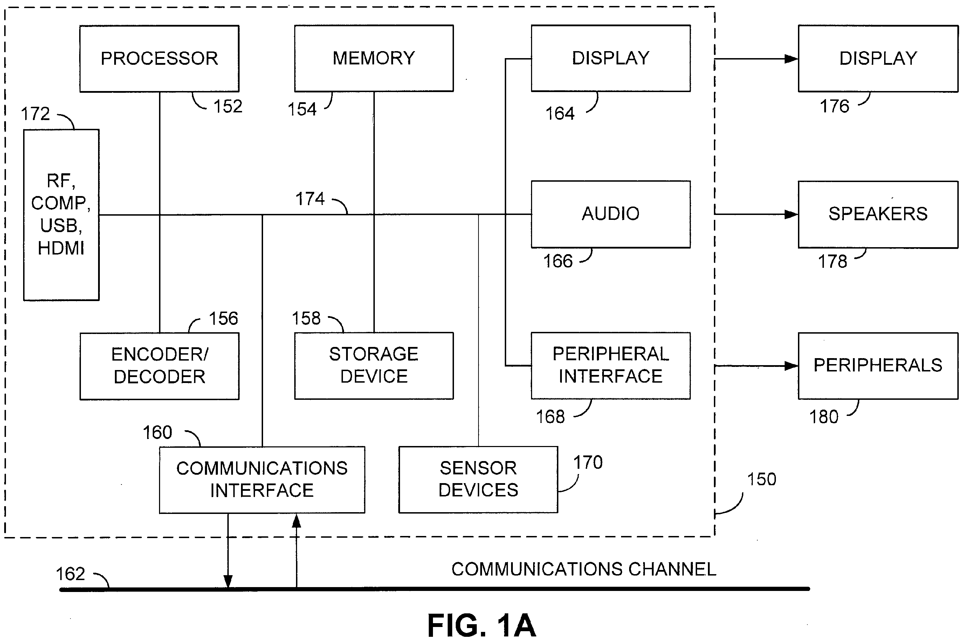

FIG. 1A is a system diagram illustrating an example set of interfaces for a system according to some embodiments. An extended reality display device, together with its control electronics, may be implemented using a system such as the system of FIG. 1A. System 150 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 150, singly or in combination, can be embodied in a single integrated circuit (IC), multiple ICs, and/or discrete components. For example, in at least one embodiment, the processing and encoder/decoder elements of system 150 are distributed across multiple ICs and/or discrete components. In various embodiments, the system 150 is communicatively coupled to one or more other systems, or other electronic devices, via, for example, a communications bus or through dedicated input and/or output ports. In various embodiments, the system 150 is configured to implement one or more of the aspects described in this document.

The system 150 includes at least one processor 152 configured to execute instructions loaded therein for implementing, for example, the various aspects described in this document. Processor 152 may include embedded memory, input output interface, and various other circuitries as known in the art. The system 150 includes at least one memory 154 (e.g., a volatile memory device, and/or a non-volatile memory device). System 150 may include a storage device 158, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 158 can include an internal storage device, an attached storage device (including detachable and non-detachable storage devices), and/or a network accessible storage device, as non-limiting examples.

System 150 includes an encoder/decoder module 156 configured, for example, to process data to provide an encoded video or decoded video, and the encoder/decoder module 156 can include its own processor and memory. The encoder/decoder module 156 represents module(s) that can be included in a device to perform the encoding and/or decoding functions. As is known, a device can include one or both of the encoding and decoding modules. Additionally, encoder/decoder module 156 can be implemented as a separate element of system 150 or can be incorporated within processor 152 as a combination of hardware and software as known to those skilled in the art.

Program code to be loaded onto processor 152 or encoder/decoder 156 to perform the various aspects described in this document can be stored in storage device 158 and subsequently loaded onto memory 154 for execution by processor 152. In accordance with various embodiments, one or more of processor 152, memory 154, storage device 158, and encoder/decoder module 156 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 152 and/or the encoder/decoder module 156 is used to store instructions and to provide working memory for processing that is needed during encoding or decoding. In other embodiments, however, a memory external to the processing device (for example, the processing device can be either the processor 152 or the encoder/decoder module 152) is used for one or more of these functions. The external memory can be the memory 154 and/or the storage device 158, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 150 can be provided through various input devices as indicated in block 172. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal. Other examples, not shown in FIG. 1A, include composite video.

In various embodiments, the input devices of block 172 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 150 to other electronic devices across USB and/or HDMI connections. It is to be understood that various aspects of input processing, for example, Reed-Solomon error correction, can be implemented, for example, within a separate input processing IC or within processor 152 as necessary. Similarly, aspects of USB or HDMI interface processing can be implemented within separate interface ICs or within processor 152 as necessary. The demodulated, error corrected, and demultiplexed stream is provided to various processing elements, including, for example, processor 152, and encoder/decoder 156 operating in combination with the memory and storage elements to process the datastream as necessary for presentation on an output device.

Various elements of system 150 can be provided within an integrated housing, Within the integrated housing, the various elements can be interconnected and transmit data therebetween using suitable connection arrangement 174, for example, an internal bus as known in the art, including the Inter-IC (I2C) bus, wiring, and printed circuit boards.

The system 150 includes communication interface 160 that enables communication with other devices via communication channel 162. The communication interface 160 can include, but is not limited to, a transceiver configured to transmit and to receive data over communication channel 162. The communication interface 160 can include, but is not limited to, a modem or network card and the communication channel 162 can be implemented, for example, within a wired and/or a wireless medium.

Data is streamed, or otherwise provided, to the system 150, in various embodiments, using a wireless network such as a Wi-Fi network, for example IEEE 802.11 (IEEE refers to the Institute of Electrical and Electronics Engineers). The Wi-Fi signal of these embodiments is received over the communications channel 162 and the communications interface 160 which are adapted for Wi-Fi communications. The communications channel 162 of these embodiments is typically connected to an access point or router that provides access to external networks including the Internet for allowing streaming applications and other over-the-top communications. Other embodiments provide streamed data to the system 150 using a set-top box that delivers the data over the HDMI connection of the input block 172. Still other embodiments provide streamed data to the system 150 using the RF connection of the input block 172. As indicated above, various embodiments provide data in a non-streaming manner. Additionally, various embodiments use wireless networks other than Wi-Fi, for example a cellular network or a Bluetooth network.

The system 150 can provide an output signal to various output devices, including a display 176, speakers 178, and other peripheral devices 180. The display 176 of various embodiments includes one or more of, for example, a touchscreen display, an organic light-emitting diode (OLED) display, a curved display, and/or a foldable display. The display 176 can be for a television, a tablet, a laptop, a cell phone (mobile phone), or other device. The display 176 can also be integrated with other components (for example, as in a smart phone), or separate (for example, an external monitor for a laptop). The other peripheral devices 180 include, in various examples of embodiments, one or more of a stand-alone digital video disc (or digital versatile disc) (DVR, for both terms), a disk player, a stereo system, and/or a lighting system. Various embodiments use one or more peripheral devices 180 that provide a function based on the output of the system 150. For example, a disk player performs the function of playing the output of the system 150.

In various embodiments, control signals are communicated between the system 150 and the display 176, speakers 178, or other peripheral devices 180 using signaling such as AV.Link, Consumer Electronics Control (CEC), or other communications protocols that enable device-to-device control with or without user intervention. The output devices can be communicatively coupled to system 150 via dedicated connections through respective interfaces 164, 166, and 168. Alternatively, the output devices can be connected to system 150 using the communications channel 162 via the communications interface 160. The display 176 and speakers 178 can be integrated in a single unit with the other components of system 150 in an electronic device such as, for example, a television. In various embodiments, the display interface 164 includes a display driver, such as, for example, a timing controller (T Con) chip.

The display 176 and speaker 178 can alternatively be separate from one or more of the other components, for example, if the RF portion of input 172 is part of a separate set-top box. In various embodiments in which the display 176 and speakers 178 are external components, the output signal can be provided via dedicated output connections, including, for example, HDMI ports, USB ports, or COMP outputs.

The system 150 may include one or more sensor devices 168. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 150 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 152 or by hardware, or by a combination of hardware and software. As a non-limiting example, the embodiments can be implemented by one or more integrated circuits. The memory 154 can be of any type appropriate to the technical environment and can be implemented using any appropriate data storage technology, such as optical memory devices, magnetic memory devices, semiconductor-based memory devices, fixed memory, and removable memory, as non-limiting examples. The processor 152 can be of any type appropriate to the technical environment, and can encompass one or more of microprocessors, general purpose computers, special purpose computers, and processors based on a multi-core architecture, as non-limiting examples.

*Scene Description Framework for XR*

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, gITF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

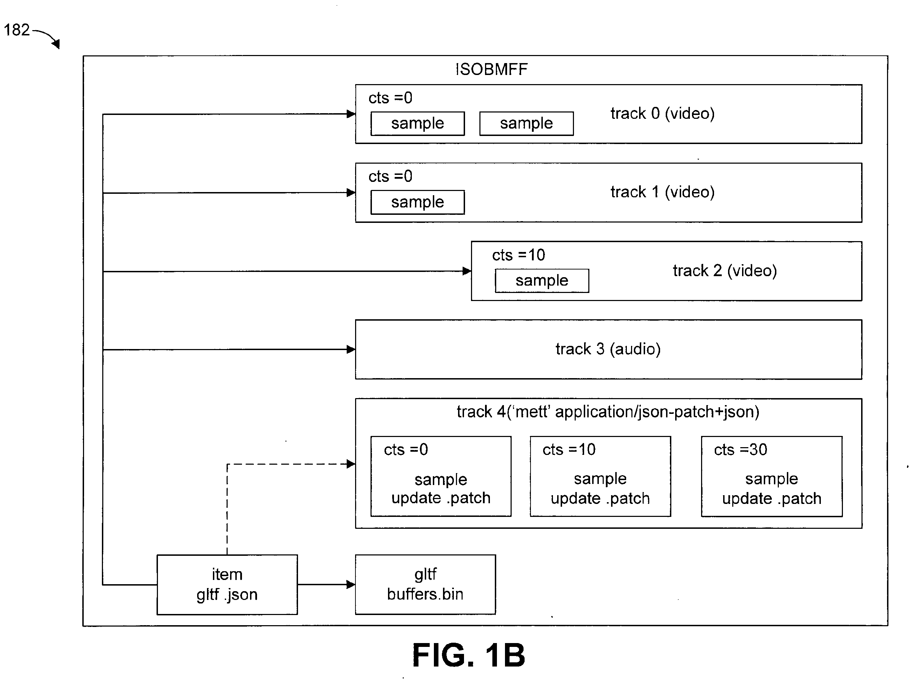

FIG. 1B is a system diagram illustrating an example set of interfaces for a scene description (stored as an item in gITF.json), three video tracks, an audio track, and a JSON patch update track in an ISOBMFF file 182 according to some embodiments.

*Runtime Interactivity*

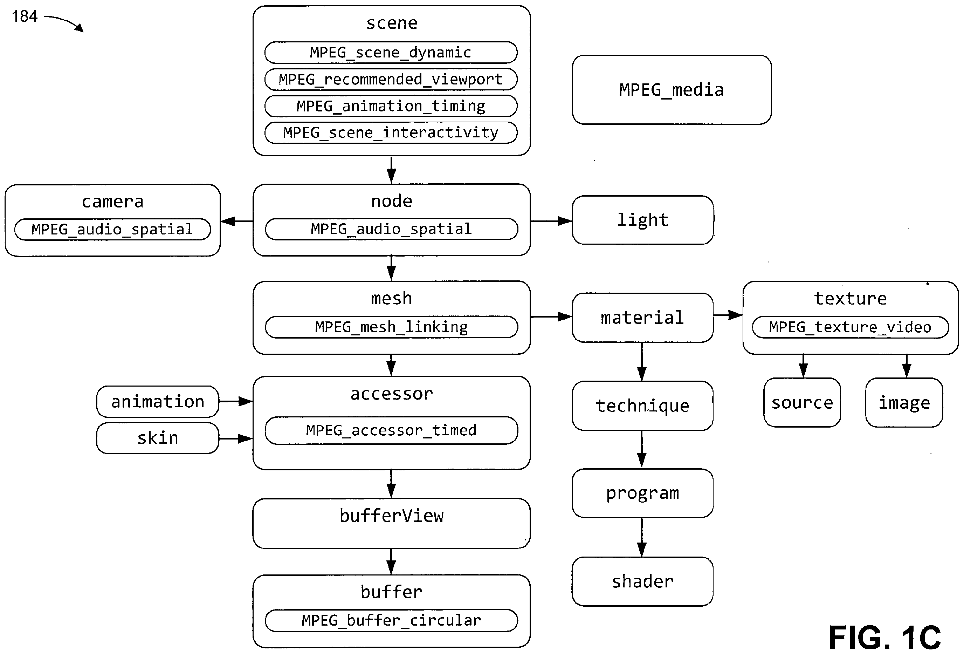

FIG. 1C is a system diagram illustrating an example set of interfaces for an MPEG-I node hierarchy 184 supporting elements of scene interactivity according to some embodiments.

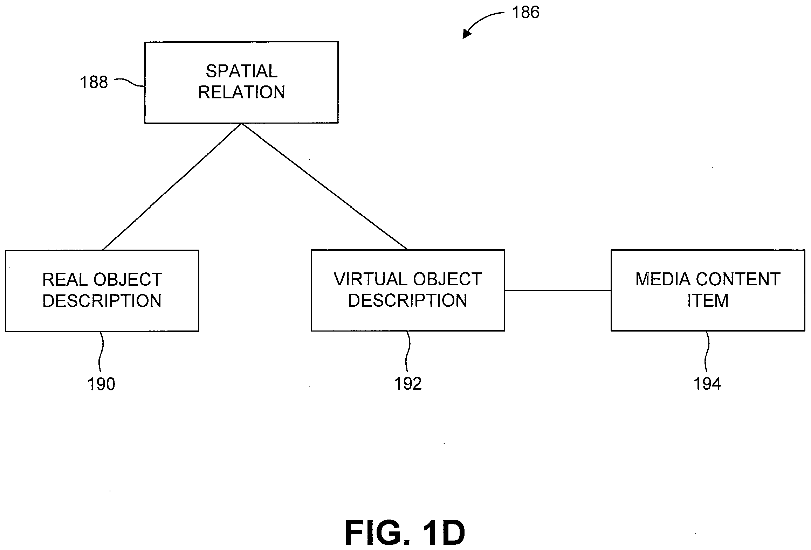

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos gITF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 ("*MPEG Extension*").

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

Haptics refer to the sense of touch and includes two components, tactile and kinesthetic. The first component relates to tactile sensations, such as friction, roughness, hardness, temperature and is felt through the mechanoreceptors of the skin (Merkel cell, Ruffini ending, Meissner corpuscle, Pacinian corpuscle), and thermoreceptors. The second component is linked to the sensations of force/torque, position, and motion/velocity provided by the muscles, tendons, and mechanoreceptors in the joints.

Haptics may be considered as a top-level medium, such as images or audio. Haptics is now part of the MPEG standardization process that standardizes a haptic codec and associated information.

This application discusses Graphics Language/Library Transmission Format (glTF)-based formats to support haptics. The glTF file format is currently the heart of MPEG-I scene descriptions, which includes the haptic codec. Haptic data is now included in the MPEG scene description format.

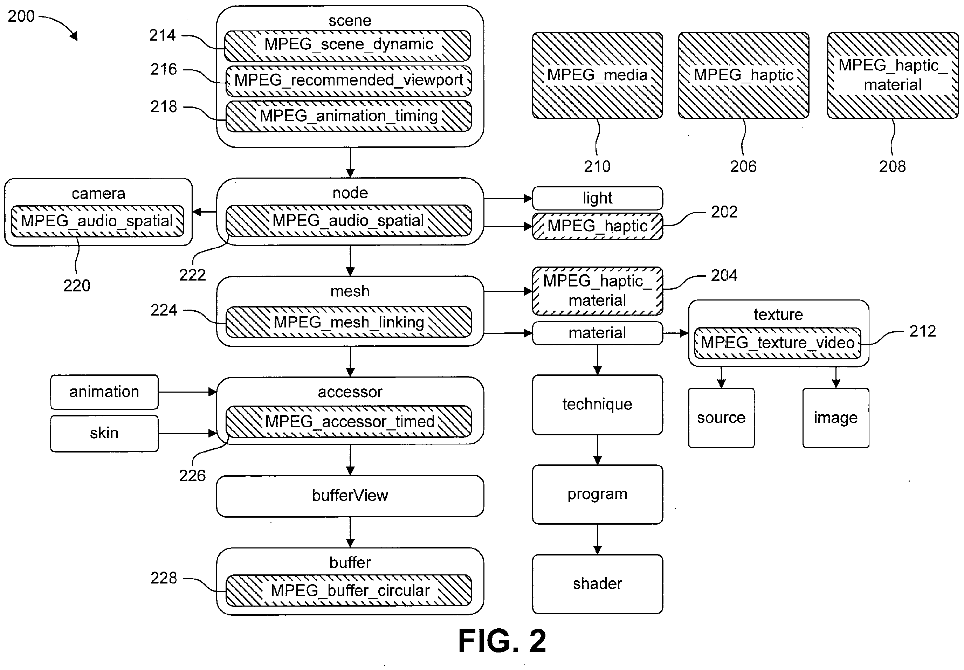

FIG. 2 is a system diagram illustrating an example set of interfaces for an MPEG-I node hierarchy showing location of example extensions according to some embodiments. As illustrated in the MPEG-I node hierarchy 200 of FIG. 2, the integration of haptics in the scene description format is based on two glTF extensions, MPEG_haptic 202, 206 and MPEG_haptic_material 204, 208. This application discusses the second glTF extension, MPEG_haptic_material 204, 208. FIG. 2 shows the location of the extensions for haptics among the other MPEG extensions to glTF 210, 212, 214, 216, 218, 220, 222, 224, 226, 228. The MPEG_haptic_material extension 204, 208 is an extension at the mesh level, at the same level as the glTF material.

The glTF "material" property contains properties that represent the appearance of a primitive. Table 1 describes the list of properties for the glTF "material" property.

**Table 1.**

| Name | Type | Required | Description |
|---|---|---|---|
| Name | string | No | The user-defined name of this object. |
| extensions | extension | No | JSON object with extension-specific objects. |
| Extras | extras | No | Application-specific data. |
| pbrMetallicRoughness | material.pbrMetallicRoughness | No | A set of parameter values that are used to define the metallic-roughness material model from Physically Based Rendering (PBR) methodology. When undefined, all the default values of pbrMetallicRoughness MUST apply. |
| normalTexture | material.normalTextureInfo | No | The tangent space normal texture. |
| occlusionTexture | material.occlusionTextureInfo | No | The occlusion texture. |
| emissiveTexture | textureInfo | No | The emissive texture. |
| emissiveFactor | number [3] | No, default: [0,0,0] | The factors for the emissive color of the material. |
| alphaMode | string | No, default: "OPAQUE" | The alpha rendering mode of the material. |
| alphaCutoff | number | No, default: 0.5 | The alpha cutoff value of the material. |

(continued)

| Name | Type | Required | Description |
|------|------|----------|-------------|
| doubleSided | boolean | No, default: false | Specifies whether the material is double sided. |

The glTF "material" property described in Table 1 corresponds to the JSON "material" schema shown in Table 2. Each of the fields shown in Table 1 appears in the schema shown in Table 2.

**Table 2.**

```
{
"$schema": "https://json-schema.org/draft/2020-12/schema",
    "$id": "material.schema.json",
    "title": "Material",
    "type": "object",
    "description": "The material appearance of a primitive.",
    "allOf": [ { "$ref": "glTFChildOfRootProperty.schema.json" } ],
    "properties": {
        "name": { },
        "extensions": { },
        "extras": { },
        "pbrMetallicRoughness": {
            "allOf": [ { "$ref":
            "material.pbrMetallicRoughness.schema.json" } ],
            "description": "A set of parameter values that are used to
            define the metallic-roughness material model from Physically Based
            Rendering (PBR) methodology. When undefined, all the default values of
            'pbrMetallicRoughness' **MUST** apply."
        },
        "normalTexture": {
            "allOf": [ { "$ref":
            "material.normalTextureInfo.schema.json" } ],
            "description": "The tangent space normal texture.",
            "gltf_detailedDescription": "The tangent space normal
            texture. The texture encodes RGB components with linear transfer
            function. Each taxel represents the XYz components of a normal vector
            in tangent space. The normal vectors use the convention +X is right and
            +Y is up. +Z points toward the viewer. If a fourth component (A) is
            present, it **MUST** be ignored. When undefined, the material does not
            have a tangent space normal texture."
        },
        "occlusionTexture": {
            "allOf": [ { "$ref":
            "material.occlusionTextureInfo.schema.json" } ],
            "description": "The occlusion texture.",
            "gltf_detailedDescription": "The occlusion texture. The
            occlusion values are linearly sampled from the R channel. Higher values
            indicate areas that receive full indirect lighting and lower values
            indicate no indirect lighting. If other channels are present (GBA),
            they **MUST** be ignored for occlusion calculations. When undefined,
            the material does not have an occlusion texture."
        },
        "emissiveTexture": {
            "allOf": [ { "$ref": "textureInfo.schema.json" } ],
            "description": "The emissive texture.",
            "gltf_detailedDescription": "The emissive texture. It
            controls the color and intensity of the light being emitted by the
            material. This texture contains RGB components encoded with the sRGB
            transfer function. If a fourth component (A) is present, it **MUST** be
            ignored. When undefined, the texture **MUST** be sampled as having
            '1.0' in RGB components."
        },
        "emissiveFactor": {
            "type": "array",
            "items": {
                "type": "number",
                "minimum": 0.0,
                "maximum": 1.0
            },
            "minItems": 3,
            "maxItems": 3,
```

```
              "default": [ 0.0, 0.0, 0.0 ],
              "description": "The factors for the emissive color of the
              material.",
              "gltf_detailedDescription": "The factors for the emissive
              color of the material. This value defines linear multipliers for the
              sampled taxels of the emissive texture."
          },
      "alphaMode": {
              "default": "OPAQUE",
              "description": "The alpha rendering mode of the material.",
              "gltf_detailedDescription": "The material's alpha rendering
              mode enumeration specifying the interpretation of the alpha value of
              the base color.",
              "anyOf": [
                      {
                              "const": "OPAQUE",
                              "description": "The alpha value is ignored, and the
                              rendered output is fully opaque."
                      },
                      {
                              "const": "MASK",
                              "description": "The rendered output is either fully
                              opaque or fully transparent depending on the alpha value and the
                              specified 'alphaCutoff' value; the exact appearance of the edges
                              **MAY** be subject to implementation-specific techniques such as
                              \"'Alpha-to-Coverage'\"."
                      },
                      {
                              "const": "BLEND",
                               "description": "The alpha value is used to
                               composite the source and destination areas. The rendered output
is
                               combined with the background using the normal painting operation
(i.e.
                               the Porter and Duff over operator)."
                      },
                      {
                               "type": "string"
                      }
              ]
      },
      "alphaCutoff": {
              "type": "number",
              "minimum": 0.0,
              "default": 0.5,
              "description": "The alpha cutoff value of the material.",
              "gltf_detailedDescription": "Specifies the cutoff threshold
              when in 'MASK' alpha mode. If the alpha value is greater than or equal
              to this value then it is rendered as fully opaque, otherwise, it is
              rendered as fully transparent. A value greater than '1.0' will render
              the entire material as fully transparent. This value **MUST** be
              ignored for other alpha modes. When 'alphaMode' is not defined, this
              value **MUST NOT** be defined."
      },
      "doubleSided": {
              "type": "boolean",
              "default": false,
              "description": "Specifies whether the material is double
              sided.",
              "gltf_detailedDescription": "Specifies whether the material
              is double sided. When this value is false, back-face culling is
              enabled. When this value is true, back-face culling is disabled and
              double-sided lighting is enabled. The back-face **MUST** have its
              normals reversed before the lighting equation is evaluated."
      }
  },
    "dependencies" : {
          "alphaCutoff" : ["alphaMode"]
  }
}
```

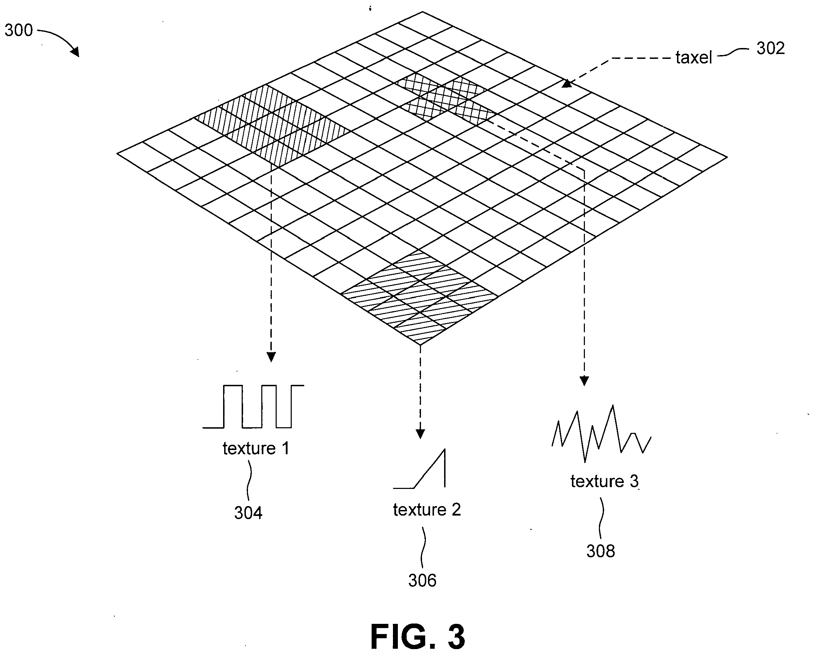

FIG. 3 is a schematic illustration showing an example grid 300 of taxels 302, mapping pixels to different haptic textures 304, 306, 308 according to some embodiments. The MPEG_haptic_material extension is a type of "material" defined to associate a haptic texture with a 3D object. A "material" may contain a texture (which may be a 2D image), along with other information than may be used for rendering. The MPEG_haptic_material extension is defined at the same level as the glTF "material" property. Instead of RGB values, the texture contains haptic values. These values are used (directly) by the haptic renderer. The extension also uses the concept of taxels. Using this principle, each pixel of the texture may be mapped to a distinct spatial (or temporal) signal as illustrated in FIG. 3. FIG. 3 shows a grid of taxels, mapping pixels to different haptic textures.

These two types of haptic texture representations (haptic values and taxels) may be combined using an array of textures for each haptic property. With this method, a haptic texture may be provided in the same file both as a 2D texture (which may be a traditional 2D texture for some embodiments) and as a taxel map, allowing the rendering engine to choose.

Additional information may be added to each element of the haptic texture arrays for the rendering engine to (adequately) interpret a texture. Each array element may contain a haptic texture and a texture type expressed as an enumeration. Possible values of the enumeration are: 0: high resolution; 1: low resolution; 2: reference; and 3: other.

A texture type of "high resolution" indicates that the haptic texture is a high resolution 2D texture directly storing haptic values. A texture type of "low resolution" indicates that the haptic texture is a low resolution 2D texture directly storing haptic values. A texture type of "reference" indicates that the haptic texture is a 2D taxel map containing references to haptic signals. Each pixel of the texture corresponds to an index in the Media_reference array of the MPEG_haptic extension. A texture type of "other" indicates that the texture format is an unknown proprietary texture format.

To interpret the data contained in 2D textures, the bit depth and range of these textures are specified in Tables 3 and 4. Table 3 gives the bit depth and range values for each haptic property for low resolution haptic textures.

**Table 3.**

| Haptic map | Format | Range | Resolution |
|---|---|---|---|
| Stiffness | 8-bit | 0-10000 N.s -1 / m.s -1 | 40 N.s -1 / m.s -1 |
| Friction | 8-bit | $\pm 5$ | 0.04 |
| Vibrotactile Texture | 8-bit | $\pm 10$ | 0.08 |
| Temperature | 8-bit | [-50 to +75]°C | 0.5°C |
| Vibration | 8-bit | [0-1] | 0,004 |
| Custom | 8-bit | 0-255 | 1 |

Table 4 gives the bit depth and range values for each haptic property for high resolution haptic textures.

**Table 4.**

| Haptic map | Format | Range | Resolution |
|---|---|---|---|
| Stiffness | 16-bit | 0-10000 N.s -1 / m.s -1 | 0.15 N.s -1 / m.s -1 |
| Friction | 16-bit | $\pm 100$ | 0.003 |
| Vibrotactile Texture | 16-bit | $\pm 100$ | 0.0015 |
| Temperature | 16-bit | [-100 to +150]°C | 0.004°C |
| Vibration | 8-bit (amplitude) 8-bit (frequency) | [0-1] [0-300] Hz | 0.004 1.17Hz |
| Custom | 16-bit | 0-65535 | 1 |

For a high-resolution texture, the haptic property values for each texture map pixel are split into two bytes. The first byte contains a magnitude value, and the second byte contains a frequency value.

Table 5 describes the list of haptic properties of the MPEG_haptic_material extension.

**Table 5.**

| Name | Type | Description |
|---|---|---|
| Stiffness | array<Enum, texture-Info> | This property indicates the perceived stiffness of a surface, which means the force perceived by the user, as opposed to the normal penetration of a material by a body part.<br><br>This property is described with a texture storing the stiffness coefficients. The suggested rendering model is :<br><br>F = kx where k is the value of stiffness for the displacement x along the asset stiffness function. This model is valid for an isotropic material. |
| Friction | array<Enum, texture-Info> | This property indicates the perceived friction, which is a force opposing the movement of a body part sliding on a surface.<br><br>This property is described with a texture storing the coefficient of friction.<br><br>The suggested rendering model is:<br><br>F_f = mu * Fn, where mu is the coefficient of friction, and Fn is the normal applied force by the body part on the surface. |
| Vibrotactile Texture | array<Enum, texture-Info> | This property indicates the perceived texture by a body part while sliding on a surface. |
| Temperature | array<Enum, texture-Info> | This property indicates the perceived temperature of an object.<br><br>This property is described with a texture storing the temperature distribution. |
| Vibration | array<Enum, texture-Info> | This property indicates a vibration signal.<br><br>This property is described with a texture storing the amplitude and / or frequency of the signal. |
| Custom | array<Enum, texture-Info> | Texture containing custom haptic data. |

The haptic properties of the glTF extension MPEG_haptic_material shown in Table 5 correspond to the JSON schema shown in Table 6. Each of the fields shown in Table 5 appears in the schema shown in Table 6.

**Table 6.**

```
{
    "$schema": "http://json-schema.org/draft-04/schema",
    "title": "MPEG_haptic_material",
    "type": "object",
    "description": "A haptic material.",
    "allOf": [{"$ref": "glTFChildOfRootProperty.schema.json"}],
    "properties": {
        "stiffness": {
            "type": "array",
            "items": {
                "type":"object",
                "properties":{
                    "texture": {
                        "allOf": [ { "$ref":
                        "textureInfo.schema.json" } ],
                        "description": "A stiffness material.",
                        "gltf_detailedDescription": "Stiffness
                        texture described with a 2D texture storing the stiffness
                        coefficients."
```

```
                    },
                    "type": {
                        "type": "string",
                        "enum": ["High_Resolution",
                        "Low_Resolution", "Reference", "Other"],
                        "description": "Indicates the type of
                        stiffness texture",
                        "default": "High_Resolution"
                    }
                }
            }
        },
        "friction": {
            "type": "array",
            "items": {
                "type": "object",
                "properties":{
                    "texture": {
                        "allOf": [ { "$ref":
                        "textureInfo.schema.json" } ],
                        "description": "A friction material.",
                        "gltf_detailedDescription": "Friction
                        texture described with a 2D texture storing the coefficient of
                        friction."
                    },
                    "type": {
                        "type": "string",
                        "enum": ["High_Resolution",
                        "Low_Resolution", "Reference", "Other"],
                        "description": "Indicates the type of
                        haptic texture",
                        "default": "High_Resolution"
                    }
                }
            }
        },
        "vibrotactile_texture": {
            "type": "array",
            "items": {
                "type":"object",
                "properties":{
                    "texture": {
                        "allOf": [ { "$ref":
                        "textureInfo.schema.json" } ],
                        "description": "A vibrotactile texture
                        material.",
                        "gltf_detailedDescription": "It is
                        described with a 2D
texture. The texture may store directly the
                        surface height or references to Haptic media sources."
                    },
                    "type": {
                        "type": "string",
```

```
                                    "enum": ["High_Resolution",
                                    "Low_Resolution", "Reference", "Other"],
                                    "description": "Indicates the type of
                                    haptic texture"
                                    "default": "High_Resolution"
                                }
                            }
                        }
                },
                "temperature": {
                    "type": "array",
                    "items": {
                        "type":"object",
                        "properties":{
                            "texture": {
                                "allOf": [ { "$ref":
                                "textureInfo.schema.json" } ],
                                "description": "A temperature material",
                                "gltf_detailedDescription": "Temperature
                                described with a 2D
texture storing the temperature distribution"
                            },
                            "type": {
                                "type": "string",
                                "enum": ["High_Resolution",
                                "Low_Resolution", "Reference", "Other"],

                                "description": "Indicates the type of
                                haptic texture",
                                "default": "High_Resolution"
                            }
                        }
                    }
                },
                "vibration": {
                    "type": "array",
                    "items": {
                        "type":"object",
                        "properties":{
                            "texture": {
                                "allOf": [ { "$ref":
                                "textureInfo.schema.json" } ],
                                "description": "A vibration material.",
                                "gltf_detailedDescription": "Vibration
                                texture signal described with a reference to a Haptic
media
                                source."
                            },
                            "type": {
                                "type": "string",
                                "enum": ["High_Resolution",
                                "Low_Resolution", "Reference", "Other"],
                                "description": "Indicates the type of
                                haptic texture",
```

(continued)

```
                                        "default": "High_Resolution"
                                }
                        }
                }
        },
        "custom": {
                "type": "array",
                "items": {
                        "type":"object",
                        "properties":{
                                "texture": {
                                        "allOf": [ { "$ref":
                                        "textureInfo.schema.json" } ],
                                        "description": "A custom material.",
                                        "gltf_detailedDescription": "Texture
                                        containing custom haptic data"
                                },
                                "type": {
                                        "type": "string",
                                        "enum": ["High_Resolution",
                                        "Low_Resolution", "Reference", "Other"],
                                        "description": "Indicates the type of
                                        haptic texture",
                                        "default": "High_Resolution"
                                }
                        }
                }
        },
        "name": { },
        "extensions": { },
        "extras": { }
    }
}
```

The glTF "material" property describes the appearance of an object (meaning its perception through the eye), while the MPEG_haptic_material describes the perception of an object through the sense of touch. Both properties provide two (distinct) sets of information on the associated object, but they are closely linked to the object material and its surface.

In accordance with the current MPEG specification, the glTF "material" property and the MPEG_haptic_material extension are completely unrelated. While this separate and independent MPEG_haptic_material extension provides a valid technical implementation, this MPEG_haptic_material extension may not be the optimal solution for the glTF format. As understood, the use of different properties in separate extensions creates overhead with the multiplication of unnecessary extra-metadata used to represent each property.

Each property of the MPEG_haptic_material is represented using an enumeration (enum) and a textureInfo object. This data structure is understood to be bug-prone and may have additional, duplicative overhead. This data structure may benefit from the definition of a proper object encapsulating the different parameters needed to represent a haptic material.

Another issue with the current definition of the MPEG_haptic_material is that the resolution of the haptic texture is set by the format. Only two resolutions may be used: a low resolution and a high resolution with a fixed bit depth and resolution for each one. This is understood to be a major restriction of the current specification for some applications.

This application defines MPEG_haptic_material as an extension of the glTF "material" property. A new object, called MPEG_hapticTexture, is defined to replace the current implementation that uses a tuple composed of an enum and a textureInfo object.

**First Configuration**

In a first configuration, an MPEG_hapticTexture extension object is defined through a set of dedicated properties including the type, the range, and a texture based on the textureInfo extension already defined in the glTF format. Table 7 shows the properties of the MPEG_hapticTexture object.

**Table 7.**

| Name | Type | Description |
|---|---|---|
| Type | Enum<string> | It represents the type of hapticTexture. The possible values are: |

(continued)

| Name | Type | Description |
|---|---|---|
| | | • Value<br>• Reference<br>• Other<br>The meaning of each possible value is given in Table 8. |
| RangeLowerBound | Number | Lower bound of the range of the property |
| RangeUpperBound | Number | Upper bound of the range of the property |
| Texture | textureInfo | Texture storing the haptic properties of the MPEG_haptic_material. |

Table 8 lists possible values for the property "Type" of the MPEG_hapticTexture object.

**Table 8.**

| Name | Description |
|---|---|
| Value | The haptic texture is a 2D texture where each pixel stores a value of the haptic property.<br>The properties RangeLowerBound and RangeUpperBound of the MPEG_hapticTexture define the range for the values stored in a pixel.<br>The haptic value associated to a pixel can be inferred using the following formula:<br>hapticValue = pixelValue * (RangeUpperBound - RangeLowerBound) + RangeLowerBound<br>where pixelValue is the normalized value of the pixel.<br>The unit of the values depends on the type of the haptic map. |
| Reference | The haptic texture is a 2D taxel map containing references to haptic signals. Each pixel of the texture corresponds to an index in the *accessors* array of the haptic object of the MPEG_haptic extension that is associated to the node. |
| Other | Unknown proprietary texture format. |

The Range parameters (RangeLowerBound and RangeUpperBound) of an MPEG_hapticTexture object are used only for the "Value" Type. For a Type of "Reference" or "Other", these Range parameter values may be ignored (e.g., not stored in the format). Such operational handling may be used to reduce the bits needed to represent the haptic data.
The previous approach had the understood disadvantage of limiting the resolution of the texture by explicitly defining only two possible resolutions, either high resolution or low resolution. The bit depth and the resolution were fixed and specified for each haptic modality along with the range for values of pixels in the texture. The present application addresses this limitation by adding the range of values of the pixels directly as a new property in the format. The previous fixed range may be used as default values for this new property. With this approach, the haptic value associated with a pixel may be inferred from the range and the normalized value of the pixel, as detailed in Eq. 1:

$$\text{hapticValue} = \text{pixelValue} * (\text{RangeUpperBound} - \text{RangeLowerBound}) + \text{RangeLowerBound} \quad (1)$$

This normalized value (*pixelValue*) depends on the bit depth of the texture and the actual value of the pixel. The normalized value may be determined or computed by the rendering engine. In some embodiments, the bit depth may be added to the properties of the Haptic Texture Object along with the range. This approach allows more creative freedom by not limiting the representation to a predefined set of parameters.
In some embodiments, a range bound comprises a boundary value of a range, e.g., an upper bound and a lower bound, e.g., a first bound and a second bound.
Using this new MPEG_hapticTexture object, the MPEG_haptic_material properties may be defined as shown in Table 9.

**Table 9.**

| Name | Type | Description |
|---|---|---|
| Stiffness | array<MPEG_hapticTexture> | This property determines the perceived stiffness of a surface. Which means the force perceived by the user opposed to the normal penetration of a material by a body part. This property is described with a texture storing the stiffness coefficients. The suggested rendering model is: F = kx where k is the value of stiffness for the displacement x along the asset stiffness function. This model is valid for an isotropic material. |
| Friction | array<MPEG_hapticTexture> | This property indicates the perceived friction, which is a force opposing the movement of a body part sliding on a surface. This property is described with a texture storing the coefficient of friction. The suggested rendering model is: F_f = mu * Fn where mu is the coefficient of friction, and Fn is the normal applied force by the body part on the surface. |
| Vibrotactile Texture | array<MPEG_hapticTexture> | This property indicates the perceived texture by a body part while sliding on a surface. |
| Temperature | array<MPEG_hapticTexture> | This property indicates the perceived temperature of an object. This property is described with a texture storing the temperature distribution. |
| Vibration | array<MPEG_hapticTexture> | This property indicates a vibration signal. This property is described with a texture storing the amplitude and / or frequency of the signal. |
| Custom | array<MPEG_hapticTexture> | Texture containing custom haptic data. |

The definition of the new MPEG_hapticTexture object allows for a comprehensive structure. Using this new MPEG_hapticTexture object, the MPEG_haptic_material extension provides a comprehensive representation. The haptic data is directly related to the material of the object. The glTF parameters of a material may be included for some embodiments (but not all), which means that an object may have a haptic representation while not being perceivable visually. Additionally, for some embodiments, an object may have a visual representation while not containing a haptic representation. Thus, the current application allows for preserving the behavior of other implementations.

Table 10 shows the JSON schema for the MPEG_hapticTexture extension. The fields shown in Table 7, which relates to the first configuration, appear in the schema shown in Table 10.

**Table 10.**

```
{
  "$schema":"http://json-schema.org/draft-04/schema",
  "title":"MPEG_hapticTexture property",
  "type":"object",
  "description":"glTF extension that defines haptic texture based on
  textureinfo, reference to MPEG Haptic standard files, or custom
  proprietary haptic data.",
  "allOf":[
      {
```

16

(continued)

```
                "$ref":"glTFProperty.schema.json"
            }
        ],
    "properties":{
        "Type":{
            "type": "string",
            "enum":[
                "Value",
                "Reference",
                "Other"
            ],
            "description":"Indicates the type of hpatic texture.",
            "default":"Value"
        },
        "RangeLowerBound ":{
            "type": "number",
            "description":" Lower bound of the range of the property."
        },
        "RangeUpperBound ":{
            "type": "number",
            "description":" Upper bound of the range of the property."
        },
        "Texture":{
            "type": "object",
            "properties":{
                "texture":{
                    "allOf":[

                        {
                            "$ref":"textureInfo.schema.json"
                        }
                    ],
                    "description":"A haptic texture material.",
                    "gltf_detailedDescription":"The haptic texture described
                    with a 2D texture. The texture may store directly value of the
                    corresponding modality or references to Haptic media sources."
                }
            }
        },
        "extensions":{
        },
        "extras":{
        }
    }
}
```

The extension MPEG_haptic_material is an extension of the glTF "material" property. The JSON schema shown in Table 11 corresponds to the MPEG_haptic_material glTF extension and the MPEG_hapticTexture object described in Table 9, which corresponds to the first configuration.

**Table 11.**

```
{
  "$schema": "http://json-schema.org/draft-04/schema",
  "title": "MPEG_haptic_material glTF extension",
  "type": "object",
  "description": "gITF extension that defines haptic properties of a material using
  the MPEG Haptic standard",
```

```
 "allOf": [ { "$ref": "glTFProperty.schema.json" } ],
"properties": {
     "stiffness": {
          "type": "array",
          "items": {
                "type":"object",
                "properties":{
                     "texture": {
                          "allOf": [ { "$ref": "MPEG_hapticTexture.schema.json" } ],
                          "description": "A stiffness material.",
                          "gltf_detailedDescription": "Stiffness texture described with a
                          MPEG_hapticTexture object. The haptic
properties may be represented using values defining
                          the stiffness of the material for every
location on the texture, or using a table of
                          reference to MPEG_media that point
toward MPEG_Haptic files, or using a proprietary
                          format."
                     }
                }
          },
                     "minItem": 0,
                     "description": "List of stiffness material associated to the
                     Material"
     },
     "friction": {
                     "type": "array",
          "items": {
                "type":"object",
                "properties":{
                     "texture": {
                          "allOf": [ { "$ref": "MPEG_hapticTexture.schema.json" } ],
                          "description": "A friction material.",

                          "gltf_detailedDescription": "Friction texture described with a
                          MPEG_hapticTexture object. The haptic properties
may be represented using values defining
                          the friction of the material for every
location on the texture, or using a table of
                          reference to MPEG_media that point
toward MPEG_Haptic files, or using a proprietary
                          format."
                     }
                }
          },
                     "minItem": 0,
                     "description": "List of friction material associated to the Material"
     },
     "vibrotactile_texture": {
                     "type": "array",
          "items": {
                "type":"object",
                "properties":{
                     "texture": {
                          "allOf": [ { "$ref": "MPEG_hapticTexture.schema.json" } ],
                          "description": "A vibrotactile material.",
                          "gltf_detailedDescription": "Vibrotactile texture described with
                          a MPEG_hapticTexture object. The haptic
properties may be represented using values
                          defining the vibrotactile intensity of
the material for every location on the texture,
                          or using a table of reference to MPEG_media
that point toward MPEG_Haptic files, or using
                          a proprietary format."
                     }
                }
          },
                     "minItem": 0,
                     "description": "List of vibrotactile material associated to the
                     Material",
     } ,
```

(continued)

```
        "temperature": {
                "type": "array",
        "items": {
                "type":"object",
                "properties":{
                    "texture": {
                        "allOf": [ { "$ref": "MPEG_hapticTexture.schema.json" } ],
                        "description": "A Temperature material.",
                        "gltf_detailedDescription": "Temperature texture described with
                        a MPEG_hapticTexture object. The haptic
properties may be represented using values
                        defining the temperature of the material
for every location on the texture, or using a
                        table of reference to MPEG_media that
point toward MPEG_Haptic files, or using a
                        proprietary format."
                    }
                }
        },
                "minItem": 0,
                "description": "List of temperature material associated to the
                Material"
        },
        "vibration": {
                "type": "array",
        "items": {
                "type":"object",
                "properties":{
                    "texture": {
                        "allOf": [ { "$ref": "MPEG_hapticTexture.schema.json" } ],
                        "description": "A vibration material.",
                        "gltf_detailedDescription": "Vibration texture described with a
                        MPEG_hapticTexture object. The haptic properties
may be represented using values defining
                        the vibration of the material for
every location on the texture, or using a table of
                        reference to MPEG_media that point
toward MPEG_Haptic files, or using a proprietary
                        format."
                    }
                }
        },
                "minItem": 0,
                "description": "List of vibration material associated to the
                Material"
        },
        "custom": {
                "type": "array",
        "items": {
                "type":"object",
                "properties":{
                    "texture": {
                        "allOf": [ { "$ref": "MPEG_hapticTexture.schema.json" } ],
                        "description": "A custom material.",
                        "gltf_detailedDescription": "Custom texture containing custom
                        haptic data."
                    }
                }
        },
        "name": { },
        "extensions": { },
        "extras": { }
    }
}
```

## Second Configuration

In a second configuration, instead of defining a Haptic Material with a Haptic Texture that uses the existing TextureInfo extension, (all of) the information related to the texture is stored directly in a in a new dedicated extension object: MPEG_HapticTextureInfo. The MPEG_HapticTextureInfo object may be defined using the representation detailed in Table 12. Table 12 shows the properties of an MPEG_HapticTextureInfo object.

**Table 12.**

| Name | Type | Description |
|---|---|---|
| Type | Enum<string> | It represents the type of hapticTexture. The possible values are:<br>• Value<br>• Reference<br>• Other<br>The meaning of each possible value is given in Table . |
| RangeLowerBound | Number | Lower bound of the range of the property |
| RangeUpperBound | Number | Upper bound of the range of the property |
| Index | glTFid | The index of the texture |
| texCoord | integer | The set index of texture's TEXCOORD attribute used for texture coordinate mapping. |

In this second configuration, the MPEG_haptic_material properties defined in the first configuration may be defined as lists of an MPEG_hapticTextureInfo object instead of lists of an MPEG_hapticTexture object.

Table 13 shows the JSON schema for the properties of an MPEG_hapticTextureInfo object, which is described above in Table 10.

**Table 13.**

```
{
  "$schema":"http://json-schema.org/draft-04/schema",
  "title":"MPEG_hapticTextureInfo property",
  "type":"object",
  "description":"glTF extension that defines haptic texture as a new textureInfo,
  reference to MPEG Haptic standard files, or custom proprietary haptic data.",
  "allOf":[
        {
            "$ref":"textureInfo.schema.json"
        }
  ],
  "properties":{
        "Type":{
            "type":"string",
            "enum":[
                "Value",
                "Reference",
                "Other"
            ],
            "description":"Indicates the type of hpatic texture.",
            "default":"Value"
        },
        "RangeLowerBound ":{
            "type":"number",
            "description":" Lower bound of the range of the property."
        },
        "RangeUpperBound ":{
            "type":"number",
            "description":" Upper bound of the range of the property."
        },
        "index":{
            "allOf":[
```

(continued)

```
                {
                    "$ref":"glTFid.schema.json"
                }
            ],
            "description":"The index of the texture."
        },
        "texCoord":{
            "type":"integer",
            "description":"The set index of texture's TEXCOORD attribute used for texture
            coordinate mapping.",
            "default":0,
            "minimum":0
        },
        "extensions":{
        },
        "extras":{
        }
    }
}
```

Table 14 shows the JSON schema for the MPEG_haptic_material extension using the second configuration, which uses lists of an MPEG_hapticTextureInfo object.

**Table 14.**

```
{
    "$schema": "http://json-schema.org/draft-04/schema",
    "title": "MPEG_haptic_material glTF extension",
    "type": "object",
   "description": "glTF extension that defines haptic properties of a material using
   the MPEG Haptic standard",
   "allOf": [ { "$ref": "glTFProperty.schema.json" } ],
   "properties": {
        "stiffness": {
            "type": "array",
            "items": {
                    "type":"object",
                    "properties":{
                        "texture": {
                            "allOf": [ { "$ref": "MPEG_hapticTextureInfo.schema.json" } ],
                            "description": "A stiffness material.",
                            "gltf_detailedDescription": "Stiffness texture described with a
                            MPEG_hapticTexture object. The haptic
properties may be represented using values defining
                            the stiffness of the material for
 every location on the texture, or using a table of
                            reference to MPEG_media that point
 toward MPEG_Haptic files, or using a proprietary
                            format."
                        }
                    }
            },
                    "minItem": 0,
                    "description": "List of stiffness material associated to the
                    Material"
        },
        "friction": {
                    "type": "array",
            "items": {
                    "type":"object",
                    "properties":{
                        "texture": {
```

```
                                    "allOf": [ { "$ref": "MPEG_ hapticTextureInfo.schema.json" } ],
                                    "description": "A friction material.",
                                    "gltf_detailedDescription": "Friction texture described with a
                            MPEG_hapticTexture object. The haptic
     properties may be represented using values defining
                                    the friction of the material for
     every location on the texture, or using a table of
                                    reference to MPEG_media that point
     toward MPEG_Haptic files, or using a proprietary
                                    format."
                            }
                        }
                },
                        "minItem": 0,
                        "description": "List of friction material associated to the Material"
        },
        "vibrotactile_texture": {
                        "type": "array",
            "items": {
                    "type":"object",
                    "properties" : {
                        "texture": {
                                    "allOf": [ { "$ref": "MPEG_ hapticTextureInfo.schema.json" } ],
                                    "description": "A vibrotactile material.",
                                    "gltf_detailedDescription": "Vibrotactile texture described with
                            a MPEG_hapticTexture object. The haptic
     properties may be represented using values
                                    defining the vibrotactile intensity of
     the material for every location on the texture,
                                    or using a table of reference to MPEG_media
     that point toward MPEG_Haptic files, or using
                                    a proprietary format."
                            }
                        }
                },
                        "minItem": 0,
                        "description": "List of vibrotactile material associated to the
                        Material",
        },
        "temperature": {
                        "type": "array",
            "items": {
                    "type":"object",
                    "properties":{
                        "texture": {
                                    "allOf": [ { "$ref": "MPEG_ hapticTextureInfo.schema.json" } ],
                                    "description": "A Temperature material.",
                                    "gltf_detailedDescription": "Temperature texture described with
                            a MPEG_hapticTexture object. The haptic
     properties may be represented using values
                                    defining the temperature of the material
     for every location on the texture, or using a
                                    table of reference to MPEG_media that point
     toward MPEG_Haptic files, or using a
                                    proprietary format."
                            }
                        }
                },
                        "minItem": 0,
                        "description": "List of temperature material associated to the
                        Material"
        },
        "vibration": {
                        "type": "array",
            "items": {
                    "type":"object",
                    "properties":{
                        "texture": {
                                    "allOf": [ { "$ref": "MPEG_ hapticTextureInfo.schema.json" } ],
```

(continued)

```
                                    "description": "A vibration material.",
                                    "gltf_detailedDescription": "Vibration texture described with a
                                    MPEG_hapticTexture object. The haptic properties may
be represented using values defining
                                    the vibration of the material for every
location on the texture, or using a table of
                                    reference to MPEG_media that point toward
MPEG_Haptic files, or using a proprietary
                                    format."
                            }
                    }
            },
                            "minItem": 0,
                            "description": "List of vibration material associated to the
                            Material"
            },
            "custom": {
                            "type": "array",
                    "items": {
                            "type":"object",
                            "properties":{
                                    "texture": {
                                            "allOf": [ { "$ref": "MPEG_ hapticTextureInfo.schema.json" } ],
                                            "description": "A custom material.",
                                            "gltf_detailedDescription": "Custom texture containing custom
                                            haptic data."
                                    }
                            }
                    },
            "name": { },
            "extensions": { },
            "extras": { }
    }
```

## Use Case Examples

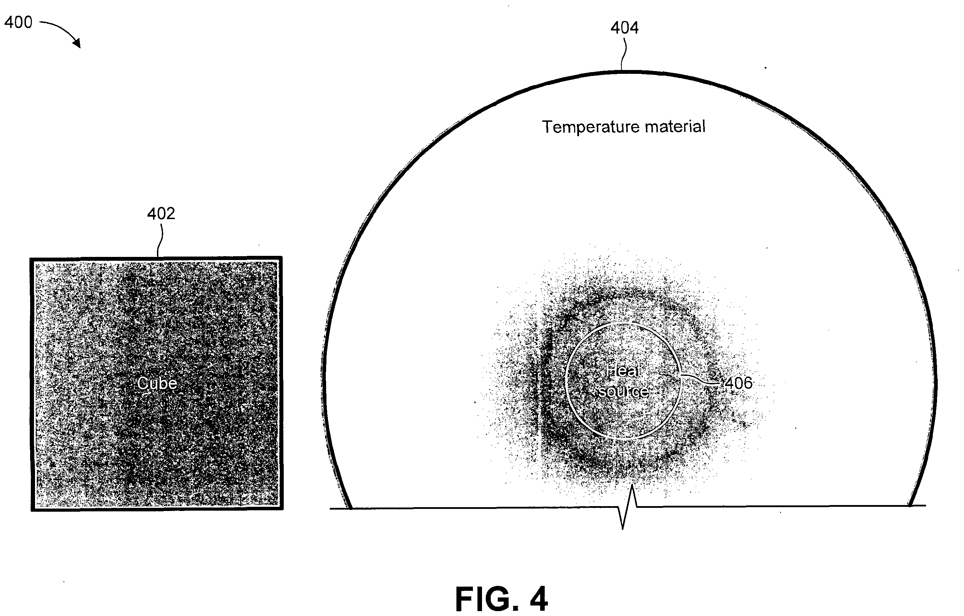

FIG. 4 is a schematic illustration showing an example scene with three example objects according to some embodiments. FIG. 4 shows a scene 400 containing a primitive object to illustrate different possible combinations of visual and haptic materials. For clarity purposes, FIG. 4 focuses on the material properties of the different scene objects. Thus, this example does not contain the entire glTF describing the scene. FIG. 4 shows an Illustration using a side view of a scene containing 3 primitive objects: a cube 402, and two spheres: a heat source 406 and a temperature material 404.

## First Configuration

Table 15 shows a JSON code listing that describes the materials contained in the scene using the MPEG_haptic_material extension and the new MPEG_hapticTexture object.

**Table 15.**

```
"materials": [
{
    "name": "CubeMaterial",
    "pbrMetallicRoughness": {
            "baseColorfactor": [0.65,0.65,0.65,1.0],
            "roughnessFactor": 0.1
    },
    "extensions": {
            "MPEG_haptic_material": {
                    "Friction": [
                    {
                            "Type": "Value",
                            "RangeLowerBound": 0,
                            "RangeUpperBound ": 1,
                            "Texture": {
                                    "index": 1,
```

(continued)

```
                                    "texCoord": 1
                            }
                        }
                    ]
                }
            }
        }
    },
    {
        "name": "HeatSourceMaterial",
        "pbrMetallicRoughness": {
                "baseColorfactor": [1.0,0.91,0.16,1.0],
                "emissiveFactor": [1.0,1.0,1.0],
                "emissiveTexture": {
                        "index": 2
                }
        },
        "extensions": {}
    },
    {
        "name": "TemperatureMaterial",
        "extensions": {
                "MPEG_haptic_material": {
                        "Temperature": [
                        {
                                "Type": "Reference",
                                "Texture": {
                                        "index": 0,
                                        "texCoord": 0
                                }

                        }
                        ]
                }
        }
    }
    ]
```

The first material shown in Table 15, which is named "CubeMaterial", is associated with the "Cube" object 402 shown in FIG. 4. This material has visual properties described using a PBR model. This first material also has haptic data using the MPEG_hapticTexture object, which is described in the First Configuration. The haptic representation used for this material is a friction map of type "Value", which means that the haptic data is represented using a texture storing the friction coefficient. The texture value is an index into a textures list for the scene, which points to the image containing friction coefficients. The resulting object in the scene may be perceived visually. The object also may be perceived physically by providing haptic friction feedback when interacting with the object.

The second material shown in Table 15, which is named "HeatSourceMaterial", is associated with the "Heat source" sphere 406 shown in FIG. 4. This second material contains only visual information using the PBR model. The resulting object may be perceived only visually.

The third material shown in Table 15, which is named "TemperatureMaterial", is associated with the "Temperature material" sphere 404 shown FIG. 4. This third material contains only haptic data and no visual information. For this third material, the MPEG_hapticTexture is of Type "Reference". Each pixel of the texture referenced in the "Texture" property is an index into the accessor array of the associated haptic object from the list in the MPEG_Haptic extension. The range properties are not present because they are not required for this MPEG_hapticTexture object of Type "Reference".

**Second Configuration**

Table 16 uses the same example shown in FIG. 4 but uses the MPEG_haptic_material extension and an MPEG_hapticTextureInfo object. Comparing Table 15 with Table 16, the first and third materials define a "Texture" with a textureInfo property in Table 15 (which is associated with the First Configuration) and stipulate directly an "index" and a "texCoord" property in Table 16 (which is associated with the Second Configuration). The second material is perceived only visually, so there is not an associated haptic effect for this example and therefore no difference between Tables 15 and 16 regarding the second material.

EP 4 636 542 A1

**Table 16.**

```
"materials": [
  {
        "name": "CubeMaterial",
        "pbrMetallicRoughness": {
                "baseColorfactor": [0.65,0.65,0.65,1.0],
                "roughnessFactor": 0.1
        },
        "extensions": {
                "MPEG_haptic_material": {
                        "Friction": [
                        {
                                "Type": "Value",
                                "RangeLowerBound": 0,
                                "RangeUpperBound": 1,
                                "index": 1,
                                "texCoord": 1
                        }
                        ]
                }
        }
        },
        {
        "name": "HeatSourceMaterial",
        "pbrMetallicRoughness": {
                "baseColorfactor": [1.0,0.91,0.16,1.0],
                "emissiveFactor": [1.0,1.0,1.0],
                "emissiveTexture": {
                        "index": 2
                }
        },
        "extensions": { }
        },
        {
        "name": "TemperatureMaterial",
        "extensions": {
                "MPEG_haptic_material": {
                        "Temperature": [
                        {
                                "Type": "Reference",
                                "index": 0,
                                "texCoord": 0
                        }
                        ]
                }
        }
        }
        1
```

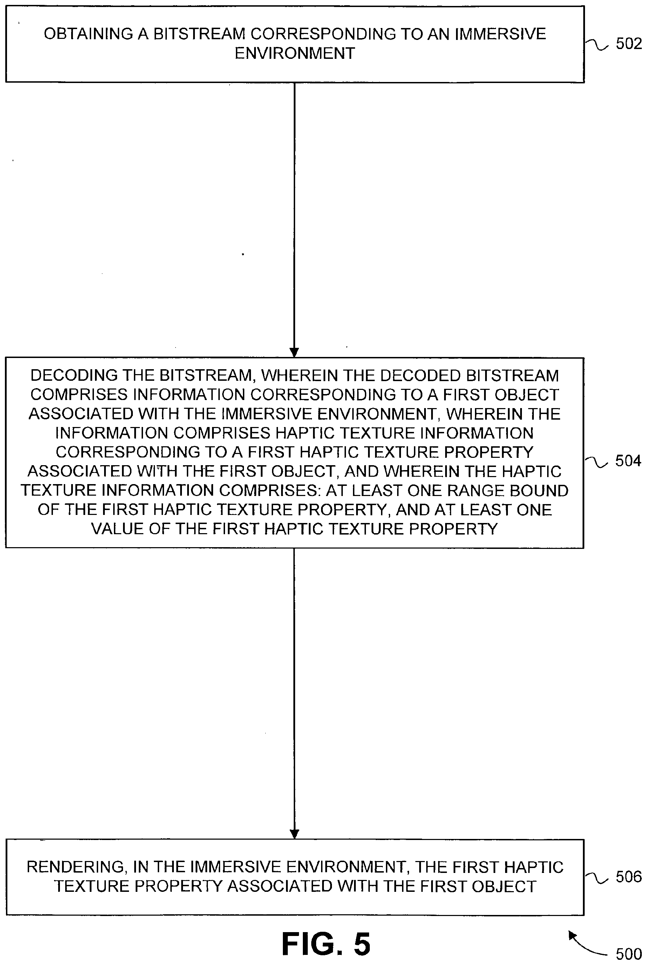

FIG. 5 is a flowchart illustrating an example process for decoding haptic texture information according to some embodiments. For some embodiments, an example process 500 may include obtaining 502 a bitstream corresponding to an immersive environment. For some embodiments, the example process 500 may further include decoding 504 the bitstream, wherein the decoded bitstream comprises information corresponding to a first object associated with the immersive environment, wherein the information comprises haptic texture information corresponding to a first haptic texture property associated with the first object, and wherein the haptic texture information comprises: at least one range bound of the first haptic texture property, and at least one value of the first haptic texture property. For some embodiments, the example process 500 may further include rendering 506, in the immersive environment, the first haptic texture property associated with the first object.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of

25

extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a bitstream corresponding to an immersive environment; decoding the bitstream, wherein the decoded bitstream includes information corresponding to a first object associated with the immersive environment, wherein the information includes haptic texture information corresponding to a first haptic texture property associated with the first object, and wherein the haptic texture information includes: at least one range bound of the first haptic texture property, and at least one value of the first haptic texture property; and rendering, in the immersive environment, the first haptic texture property associated with the first object.

For some embodiments of the example method, the first haptic texture property is selected from the group consisting of stiffness, friction, vibrotactile texture, temperature, vibration, and custom haptic data.

For some embodiments of the example method, the haptic texture information is formatted to comply with an MPEG-I-based scene description format.

For some embodiments of the example method, the haptic texture information is formatted to comply with an MPEG_haptic_material extension to a gITF-based protocol.

For some embodiments of the example method, the haptic texture information is formatted to comply with an MPEG_hapticTexture object extension to a gITF-based protocol.

For some embodiments of the example method, the haptic texture information further includes an index associated with the first haptic texture property.

Some embodiments of the example method may further include using the index to determine a location of the at least one value of the first haptic texture property.

For some embodiments of the example method, the haptic texture information further includes a texture coordinate index corresponding to a texture coordinate map associated with the first haptic texture property.

Some embodiments of the example method may further include using the texture coordinate index to determine a location of the at least one value of the first haptic texture property.

For some embodiments of the example method, the information further includes visual material information corresponding to a visual material property associated with the first object,

Some embodiments of the example method may further include rendering, in the immersive environment, the visual material property associated with the first object.

For some embodiments of the example method, the haptic texture information further includes type information indicating a type associated with the first haptic texture property.

For some embodiments of the example method, the haptic texture information further includes a 2D map including references to haptic signals.

Some embodiments of the example method may further include: rendering, in the immersive environment, a second haptic texture property associated with the first object, wherein the information further includes haptic information corresponding to the second haptic texture property associated with the first object, and wherein the haptic information includes: at least one range bound of the second haptic texture property, and at least one value of the second haptic texture property.

An example apparatus in accordance with some embodiments may include: a processor; and a memory storing instructions operative, when executed by the processor, to cause the apparatus to perform the method of any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   obtaining a bitstream corresponding to an immersive environment;
   decoding the bitstream,

   wherein the decoded bitstream comprises information corresponding to a first object associated with the immersive environment,
   wherein the information comprises haptic texture information corresponding to a first haptic texture property associated with the first object, and
   wherein the haptic texture information comprises:

   at least one range bound of the first haptic texture property, and
   at least one value of the first haptic texture property; and

   rendering, in the immersive environment, the first haptic texture property associated with the first object.

2. The method of claim 1, wherein the first haptic texture property is selected from the group consisting of stiffness, friction, vibrotactile texture, temperature, vibration, and custom haptic data.

3. The method of any one of claims 1-2, wherein the haptic texture information is formatted to comply with an MPEG-I-based scene description format.

4. The method of any one of claims 1-3, wherein the haptic texture information is formatted to comply with an MPEG_haptic_material extension to a glTF-based protocol.

5. The method of any one of claims 1-4, wherein the haptic texture information is formatted to comply with an MPEG_hapticTexture object extension to a glTF-based protocol.

6. The method of any one of claims 1-5, wherein the haptic texture information further comprises an index associated with the first haptic texture property.

7. The method of claim 6, further comprising using the index to determine a location of the at least one value of the first haptic texture property.

8. The method of any one of claims 1-7, wherein the haptic texture information further comprises a texture coordinate index corresponding to a texture coordinate map associated with the first haptic texture property.

9. The method of claim 8, further comprising using the texture coordinate index to determine a location of the at least one value of the first haptic texture property.

10. The method of any one of claims 1-9, wherein the information further comprises visual material information corresponding to a visual material property associated with the first object.

11. The method of claim 10, further comprising rendering, in the immersive environment, the visual material property associated with the first object.

12. The method of any one of claims 1-11, wherein the haptic texture information further comprises type information indicating a type associated with the first haptic texture property.

13. The method of any one of claims 1-12, wherein the haptic texture information further comprises a 2D map comprising references to haptic signals.

14. The method of any one of claims 1-13, further comprising:

rendering, in the immersive environment, a second haptic texture property associated with the first object, wherein the information further comprises haptic information corresponding to the second haptic texture property associated with the first object, and
wherein the haptic information comprises:

at least one range bound of the second haptic texture property, and
at least one value of the second haptic texture property.

15. An apparatus comprising:

a processor; and
a memory storing instructions operative, when executed by the processor, to cause the apparatus to perform the method of any one of claims 1 through 14.

**FIG. 1A**

EP 4 636 542 A1

EP 4 636 542 A1

**FIG. 1B**

184 —

**scene**
- MPEG_scene_dynamic
- MPEG_recommended_viewport
- MPEG_animation_timing
- MPEG_scene_interactivity

MPEG_media

**camera**
- MPEG_audio_spatial

**node**
- MPEG_audio_spatial

light

**mesh**
- MPEG_mesh_linking

material

**texture**
- MPEG_texture_video

animation

skin

**accessor**
- MPEG_accessor_timed

technique

source

image

bufferView

program

**buffer**
- MPEG_buffer_circular

shader

**FIG. 1C**

FIG. 1D

EP 4 636 542 A1

**FIG. 2**

EP 4 636 542 A1

FIG. 3

EP 4 636 542 A1

FIG. 4

OBTAINING A BITSTREAM CORRESPONDING TO AN IMMERSIVE ENVIRONMENT — 502

DECODING THE BITSTREAM, WHEREIN THE DECODED BITSTREAM COMPRISES INFORMATION CORRESPONDING TO A FIRST OBJECT ASSOCIATED WITH THE IMMERSIVE ENVIRONMENT, WHEREIN THE INFORMATION COMPRISES HAPTIC TEXTURE INFORMATION CORRESPONDING TO A FIRST HAPTIC TEXTURE PROPERTY ASSOCIATED WITH THE FIRST OBJECT, AND WHEREIN THE HAPTIC TEXTURE INFORMATION COMPRISES: AT LEAST ONE RANGE BOUND OF THE FIRST HAPTIC TEXTURE PROPERTY, AND AT LEAST ONE VALUE OF THE FIRST HAPTIC TEXTURE PROPERTY — 504

RENDERING, IN THE IMMERSIVE ENVIRONMENT, THE FIRST HAPTIC TEXTURE PROPERTY ASSOCIATED WITH THE FIRST OBJECT — 506

# FIG. 5

— 500

## EUROPEAN SEARCH REPORT

**Application Number**

EP 24 31 5179

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/198622 A1 (INTERDIGITAL CE PATENT HOLDINGS SAS [FR]) 19 October 2023 (2023-10-19) * page 2, lines 24-30 * * page 3, lines 2-15 * * page 5, line 5 - page 6, line 31 * * page 8, line 6 - page 18, line 22 * * page 32, line 3 - page 33, line 10 * ----- | 1-15 | INV. G06F3/01 H04N21/236 |
| A | WO 2022/100985 A1 (INTERDIGITAL CE PATENT HOLDINGS SAS [FR]) 19 May 2022 (2022-05-19) * the whole document * ----- | 1-15 | |

**TECHNICAL FIELDS SEARCHED (IPC)**

G06F
H04N

The present search report has been drawn up for all claims

| Place of search | Date of completion of the search | Examiner |
|---|---|---|
| Munich | 26 September 2024 | Gkeli, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 31 5179

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2024

| Patent document cited in search report | Publication date | Patent family member(s) | Publication date |
|---|---|---|---|
| WO 2023198622 A1 | 19-10-2023 | TW 202409854 A<br>WO 2023198622 A1 | 01-03-2024<br>19-10-2023 |
| WO 2022100985 A1 | 19-05-2022 | EP 4244704 A1<br>JP 2023549747 A<br>US 2023418381 A1<br>WO 2022100985 A1 | 20-09-2023<br>29-11-2023<br>28-12-2023<br>19-05-2022 |

EPO FORM P0459

For more details about this annex : see Official Journal of the European Patent Office, No. 12/82

**EP 4 636 542 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 23307192 A
- EP 23307323 A